# EUROPEAN PATENT SPECIFICATION

(11) **EP 0 585 422 B1**
(45) Date of publication and mention of the grant of the patent: **11.11.1998**
(21) Application number: 93903722.2
(22) Date of filing: 11.02.1993
(51) Int. Cl.: A01M 7/00, A01M 21/04, B05B 1/28, B05B 15/04

(54) **AGRICULTURAL CHEMICAL DISTRIBUTOR**
LANDWIRTSCHAFTLICHE VERTEILMASCHINE FÜR CHEMIKALIEN
DISTRIBUTEUR DE PRODUITS CHIMIQUES A USAGE AGRICOLE

(30) Priority: 25.02.1992 AU 1054/92
(43) Date of publication of application: 09.03.1994
(73) Proprietor: REDWAY, Graham John, Berri, S.A. 5343 (AU)
(72) Inventor: REDWAY, Graham John, Berri, S.A. 5343 (AU)
(74) Representative: Wombwell, Francis
(86) International application number: PCT/AU93/00059
(87) International publication number: WO 93/16589

(56) References cited:
- AU-A- 4 115 185
- AU-A- 4 165 285
- AU-A- 6 393 890
- US-A- 3 977 605
- US-A- 4 199 896
- DERWENT ABSTRACT Accession No. 85-322300/51, Class P14; & SU,A,1161053 (GEOR PLANTS PROTECT) 15 June 1985 (15.06.85), see drawing, rubber case (14).

## Description

This invention relates to a distributor which is useful for distribution low volumes of high concentrate chemical in agricultural applications, and is particularly useful for distributing herbicides while limiting overspray which might otherwise damage valuable plants such as grapes vines or orchard trees.

### BACKGROUND OF THE INVENTION

It is already known that a fan jet type nozzle at one atmosphere of pressure will give about 45% of its number of droplets under 30µm, and consequently when open spraying in agriculture, there is a general wastage of spray chemicals used for example for weedicide applications due to the droplets becoming airborne. Many weedicides are exceedingly effective, and for example the weedicide sold by Monsanto under the registered trade mark "ROUNDUP" can be effective when used in very small quantities. Hence overspray can be very damaging. However, it is known that droplets which exceed 400µm will frequently bounce off foliage, and be wasted on the ground. For this reason, there has been much development into rotational spray devices which can give selective narrow ranges of droplet size from 50 to 300 microns, and wherein about 90% of the droplets fall in any one selected range (for example a range of 70 to 130 micron).

The British company CDA Ltd, of Lockinge, Wantage, Oxon, UK, distributed a pamphlet in October 1983 entitled "The Principles of CDA Spraying." Experimentation by the inventor herein has generally confirmed the information contained in that pamphlet to be the most accurate available to him. It compared conventional nozzle spraying with so-called "constant droplet application" (CDA) spraying which utilised a micro-spray head having spinner to produce droplets, and illustrated that a "conventional nozzle" which was tested, distributed some chemical in small droplets below 40 microns size (which was both wasted and damaging due to 'overspray'), and about one half the chemical was in droplets exceeding 150 microns, but included in a very small number of droplets.

This compared very unfavourably with a Constant Drop Applicator utilising a spinner, wherein only a small number of droplets were less than 35 microns, and none less than 15 microns, and none exceeded about 120 micron size. Most of the droplets were between 70 and 110 micron size, and accounted also for most of the chemical. Thus wastage was largely avoided, which would otherwise have been due to overspray of small droplets, and excessive quantities of chemical in large droplets.

The main object of this invention is to further enhance the advantages of using a CDA sprayer, and, if necessary enhance the use of a conventional sprayer, in both cases reducing wastage of chemicals due to wind losses or large droplets.

It is already known to provide a towable spraying device for attachment to a tractor to reduce the drift of finely misted particles of weedicide, and one example can be seen in the United States Patent 4,186,879 in the name of KINDER, wherein a generally rectilinear shroud was provided with depending flexible baffles to comprise fore and aft wall sections of the shroud and engage and ride over rough terrain while still confining the spray within the shroud.

However, a sprayer must essentially be used under terrain conditions which vary widely. A rectilinear shroud must not be permitted to encounter such obstructions as a tree trunk or vine stem, since crop damage will otherwise ensue.

Also known from US-A-4 199 896 (Lehman) is a controlled-area boom sprayer for enabling spraying close to trees or bushes, which includes a bell-shaped sprayer hood, which incorporates a position-sensing element for actuating the sprayer upon engagement with an obstruction, such as a tree trunk, to enable spraying close up to bushes or trees and which switches off the spray delivery when the hood disengages from the tree or bush, to thereby provide for controlled spraying in close proximity to such. However, although the position-sensing arrangement comprises a flexible band having a resilient member thereon, the hood itself is necessarily a relatively rigid structure which could endanger sensitive plants and therefore has some restriction on its available use.

As far as is known to the applicant, a satisfactory provision has not heretofore been forthcoming to enable a towable device to spray weeds close to the stems of vines, bushes or trunks of trees, without endangering leaves, trunk or stem, and for example in the substantially rigid structure previously proposed, if carried too close to the trees or vines, there is a danger of the trunks or stems being damaged. In an extreme case, a sudden lurch due to engagement of the towed or towing vehicle with the walls of a plough furrow could conceivably result in destruction of a young plant.

The main object of this invention therefore is to provide improvements whereby it is possible to spray close to the stems of the vines, bushes or trees without endangering them either due to overspray reaching the leaves or in some instances reaching the green stalks or stems of the bushes or vines. It is a further object to inhibit loss due to wind drift so that a very fine mist of spray can be applied in minute quantities and yet be effective.

### BRIEF SUMMARY OF THE INVENTION

According to the present invention there is provided an agricultural chemical liquid distributor comprising, in combination, a frame, a shroud supported by the frame and delineating a chemical distributing space, and a spray head having an outlet,
attachment means for attaching the frame to a vehicle, means supporting the spray head with its outlet within the shroud space, the shroud having a generally circular peripheral skirt of deformable material and being supported by the frame for free rotation about a generally vertical axis,
   **characterised by:**
the shroud being of such shape and size that passage of the distributor past an obstruction encountered by the skirt will cause sufficient radially inward deformation of said skirt material to slope inwardly and deflect spray away from said obstruction and back beneath said shroud, and also effect rotation of the shroud.

In a preferred embodiment of the invention, the freely rotatable shroud is carried on bearings from the frame and the generally circular peripheral skirt of readily deformable material which terminates close to the ground, the periphery being of sufficient diameter (at least ½ meter) that the shroud is readily rotated upon engagement with a stem or trunk of a vine, bush or tree without damaging same. The periphery may comprise a plurality of flexible bristles or strips of material depending from a periphery of a central annular portion of elastomeric material, and such an arrangement is useful for bushes or trees which are protected by sufficient bark that a small amount of spray which permeates the bristles or strips will not inflict damage. However, the invention is not limited to use of bristles because sometimes there is need for the invention to be applied to crops wherein the stems themselves have soft bark or are green (for example coffee, macadamia nuts or blueberries), and in another embodiment use may be made of a generally circular mushroom shaped shroud which is rotatable on bearings and which has a very flexible peripheral edge which is deformable when it encounters a stem or trunk of a bush, vine or tree in such a say that spray is deflected away from the base of the trunk but by only a very small distance (for example 20 to 30 mm). Such an arrangement overcomes difficulties which may otherwise be caused by penetration of the weedicide between the bristles or strips if comprised in a depending skirt.

With either of the above types of shroud, there is still a danger of an unexpected lurch of the towing or towed vehicles, and further it is necessary to provide sufficient rigidity to the rotatable shroud that it is dimensionally stable. In an embodiment of the invention the bearings are carried by means biased to be movable so that not only is a growing plant protected by the readily deformable skirt, but the entire shroud can be deflected bodily away from the trunk or stem of a tree, bush or vine, by a force small enough that the trunk or stem is not likely to be damaged, but the shroud can be returned to its normal path of travel by the biasing means, which can be a relatively light spring. Such an arrangement is a safety device and would not be operable under normal usage of the invention.

While it may be feasible for the mechanical requirements to be met solely by the swivelling of the arm to displace a shroud upon encountering a trunk or stem, such an arrangement is not favoured in this invention, since it would result in a concentration of weedicide on the approach side of a vine bush or tree, and an undesirable density reduction on the receding side, but by utilising a readily deformable shroud the speed of the spray head will be more nearly constant. A rigid shroud may also cause damage, for example to small plants, even if the spring loading is light.

Some weedicides are quite expensive and can inflict serious environmental damage if not contained, and an object therefore of this invention is to provide means whereby the usage of the chemicals can be much reduced, and this is achieved by the invention which enables a fine mist to be produced within the shroud but contained therein, and thereby allowing the shroud to be moved at much higher speeds through an orchard or vineyard than heretofore. A further advantage of the invention is that the equipment which is used can be of quite low cost, requiring no driving means to effect rotation of the shroud.

More specifically, in an embodiment of this invention there is provided an agricultural chemical liquid distributor having a frame comprising a fixed frame member, an assembly of a spray head within a shroud, the shroud having a generally circular peripheral skirt of deformable material, and a bearing supporting the shroud with respect to the frame for free rotation about a generally vertical axis, the shroud being of such size and configuration that passage of the distributor past an obstruction encountered by the skirt will cause deformation of said skirt material and effect said rotation of the shroud.

An embodiment of the invention is described hereunder in some detail with reference to and is illustrated in the accompanying drawings in which:
Fig. 1 is a perspective view showing a rotatable shroud carried by but laterally displaced from a motor vehicle;
Fig. 2 is a section through the shroud showing the bearings and support means of Fig. 1 but drawn to a larger scale;
Fig. 3 is a section similar to Fig. 2 but not showing the bearings, and illustrating a shroud wherein the deformable skirt is unitary with the central part of the shroud; and
Fig. 4 is a perspective view of a larger diameter shroud with a deformable skirt, and carried on a frame which is readily displaced laterally.

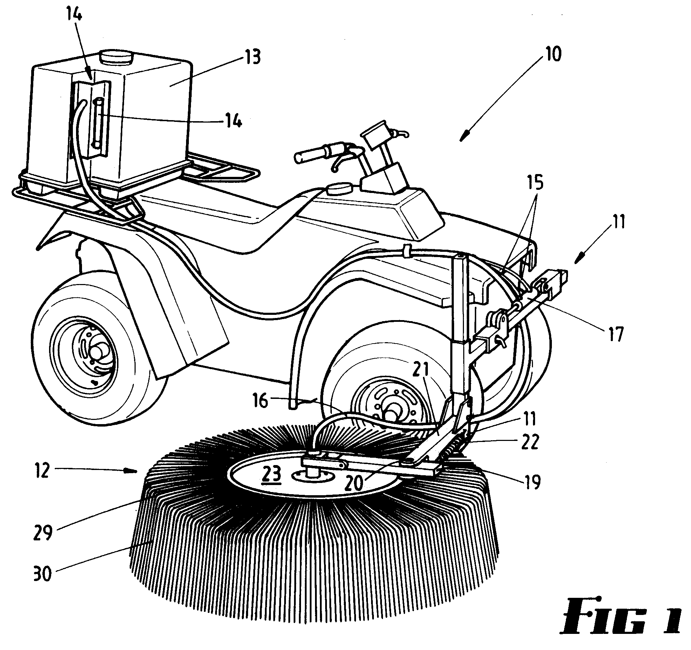

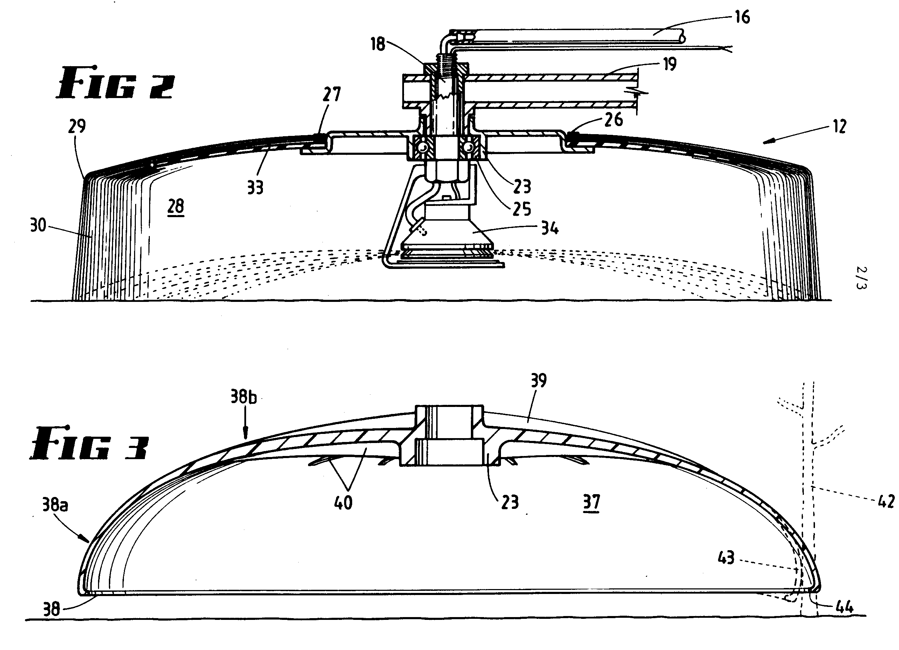

In the first embodiment which is illustrated in Figs. 1 and 2, a light weight motor vehicle 10 is provided with a frame member 11 carried by a bracket 11a on a sleeve attached to the vehicle, in which the frame member 11 is adjustable for position, and can be used either left hand, right hand, or both, to support one or a pair of outrigger shrouds 12. Only one is illustrated. The vehicle 10 also carries on it a tank 13 or container of concentrated agricultural spray, and the tank 13 itself carries on it a subassembly 14 which includes a pump and flow meter for pumping the agricultural spray. Use may also be made of a second pump (not shown) for providing hydraulic pressure for positioning the shroud 12 laterally with respect to the vehicle 10. (The second pump may be the hydraulic pump of a tractor.) Electrical energy is also required for spinning a spray generating device but that only needs to be portion of the electrical equipment of the vehicle 10. Hoses 15 and 16 extend respectively to an hydraulic adjustment cylinder 17 (which is an optional device) and a spray conduit which extends through a hollow bolt 18 in the shroud 12. The cylinder 17 is operable to effect lateral adjustment of position of the frame 11.

The shroud 12 is an assembly carried on one end of a swinging arm 19 which is pivoted at 20 to an outstanding portion 21 of the frame 11, and a tension spring 22 extends between an end of the arm to bias the arm 19 and frame 11. If only one of the hoses 15 extends to the hydraulic adjustment cylinder 17 so that there is hydraulic fluid on one side of the piston only in cylinder 17, the shroud assembly 12 can be deflected laterally but the arm 19 cannot pivot outwardly beyond a selected position depending on the amount of fluid introduced into the cylinder 17. This arrangement however is usually unnecessary except if the invention is to be used on very rough terrain.

In Fig. 1 the frame 11 is shown mounted on the front end of vehicle 10, but in many instances it may be mounted on the rear end. If vehicle 10 is a longer vehicle than shown, for example a tractor, frame 11 is best mounted beneath the tractor, and between the front and rear wheels so as to limit lateral movement of the outrigger shrouds when direction of travel is changed. Such an arrangement would commonly use two shrouds, one each side of the tractor, and positioned laterally by one cylinder 17.

Reference is now made to Fig. 2 wherein the shroud assembly 12 is shown to comprise a rigid boss 23 journalled to the hollow suspension bolt 18 through a bearing 25 so that the boss 23 is freely rotatable. The boss 23 may be of metal or rigid moulded fibreglass reinforced plastics, and terminates in an annular recess 26 which carries the supporting bead 27 of a length of brush 28 of the type which sometimes might be used on a road sweeper, bristles of brush 28 being kinked at 29 (by heat means) so that the depending skirt 30 extends downwardly from the kinks 29 to terminate near the ground over which the shroud is to traverse. It is desirable to use small diameter bristles because of their flexibility, and because they more effectively reduce overspray.

The inner portions of the bristles of brush 28 are supported by an annular elastomeric support ring 33 which in this embodiment is formed from flexible polyurethane, and the bristles extend outwardly beyond the periphery of ring 33 to the kinks 29.

In this embodiment, use is made of a CDA micro-spray head 34 contained within the shroud 12 and forming therewith a spray head and shroud assembly.
The spray head shown was sold under the trade mark MICROMAX and now manufactured by the British company MICRON at 3 Mills, Bromyard, Herefordshire, England. These spray heads have the facility to produce a droplet size wherein most droplets lie in the range for spray conditions of 75 to 120µm, and although spray heads can have a range capable of producing droplets as large as 400µm, it is believed that droplets in excess of 300µm are undesirable and that ranges of droplet size should be selected which do not emit droplets in excess of 300µm. Careful selection of appropriate ranges is important in achieving optimum efficiency, and requirements will vary for different crops. Fig 2 illustrates in dashed lines, a typical cross-section of a spray emanating from spray head 34.

In many instances, however, it is not necessary or even desirable to use the bristles of brush 28 and Fig 3 illustrates a unitary moulding 37 of polyethylene wherein the wall thickness reduces towards the periphery 38 from the central boss 23, and in some instances additional stiffness is imparted between the boss 23 and an intermediate portion of the wall by a plurality of radiating stiffening ribs 39, radially extending corrugations 40, or both (as shown). Although the moulding 37 is a unitary moulding, its radially outer portion 38a can comprise a softer formulation of plastics material than its radially inner portion 38b, and thereby reduce need for the stiffening ribs 39 or the corrugations 40.

With the arrangement shown, the periphery 38 can be distorted (buckled) by quite a small stem 42 of a plant (for example a coffee plant) and when being deflected as shown at 43 in dashed lines, will provide a steeper surface for deflecting the micronic droplets of weedicide away from the base of stem 42 by a small amount, and even if tall growing grass is deflected outwardly from the space containing the micronic droplets, sufficient weedicide will contact the exposed grass within the space to be effective. Any condensate will run down the steeper inner wall at the deflected area onto the weeds growing adjacent the stem 42. By having a higher degree of stiffness in the inner portion of the shroud moulding 37 than at the periphery, buckling of the periphery where it encounters the stem may be confined to a small distance around the periphery, and experiments have shown that it is possible to reduce the weeds adjacent the stem 42 to an area approximately 50 mm in diameter. This can be done without the stem 42 encountering sufficient micronic droplets to damage the vine, bush or tree. The periphery can be plain, or, as shown, have an inwardly directed bead 44 which will limit the distortion length of a buckle. In some instances, the generally annular periphery 38 may include closely spaced inwardly formed depressions to still further reduce the distortion length.

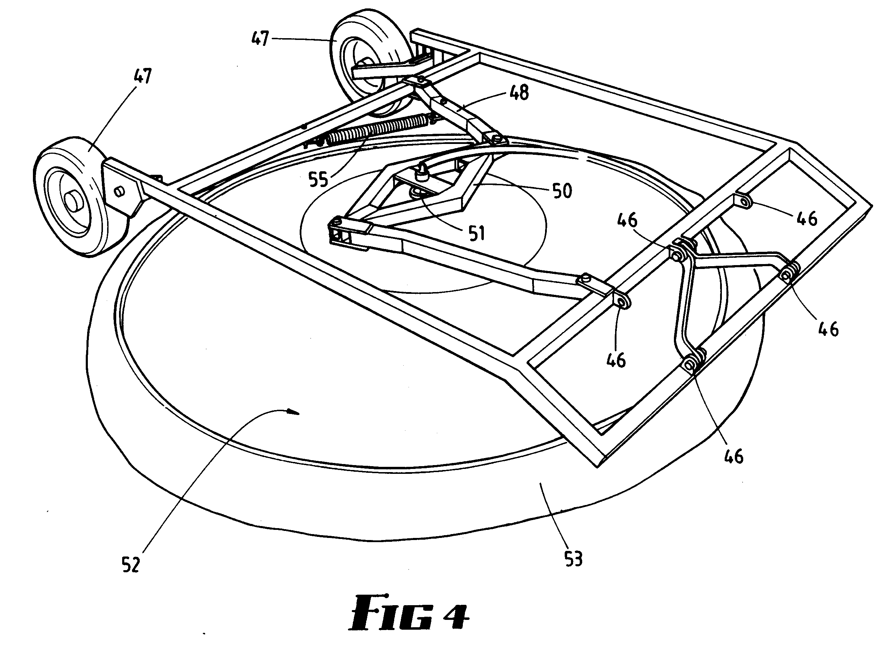

Fig 4 illustrates a slightly more expensive arrangement wherein a supporting sub-frame 45 is arranged with vehicle hitch lugs 46 for towing or for suspension by the arms of a three point linkage of a tractor as shown, the sub-frame 45 being supported at its rear end by trailing wheels 47.

There are two spaced swing arms 48, the swinging ends of which are intermediate the frame members of supporting sub-frame 45, and a central sub-frame 50 connects the swinging ends of arms 48. The central sub-frame 50 carries a bearing boss 51 which rotationally supports a steel dished disc 52. A skirt 53 of elastomeric material depends from the periphery of disc 52, and flares out radially and axially therefrom. An intermediate annular portion of elastomeric material may be interposed between disc 52 and skirt 53, as in the first embodiment. The large diameter of disc 52 effects a gradual transverse movement upon lateral deflection when skirt 53 encounters a stem or trunk. Return spring 55 is provided with adjustable tensioning means by varying its anchor point on frame 50 to compensate, for example, for the effect of sloping terrain. By simple relocation of the spring between the other arm 48 and the frame 45, the disc can function on the left hand side of the frame instead of the right hand side as shown.

Because the diameter of the shroud can be quite large (exceeding one meter) and its rotational inertia small, the amount of reaction force needed to cause rotation is so small that very little, if any, damage to growing plants occurs. The distortion, or buckling, of the periphery will occur over only a small portion of its circumference, in equipment made in accordance with the above embodiments. Surprisingly large savings of weedicide have been achieved, even when substantial proportions of the chemical are of larger droplet size, up to 400µm, but as said above, best results are usually achieved if the droplet size is between 75µm and 110µm.

Containment of small droplets below 75µm by the shroud assists in avoiding damage to crops or environment.

## Claims

1. An agricultural chemical liquid distributor comprising, in combination, a frame (11), a shroud (12) supported by the frame (11) and delineating a chemical distributing space, and a spray head (34) having an outlet,
attachment means (11a) for attaching the frame to a vehicle, means supporting the spray head (34) with its outlet within the shroud space, the shroud (12) having a generally circular peripheral skirt (30) of deformable material and being supported by the frame (11) for free rotation about a generally vertical axis,
**characterised by:**
the shroud (12) being of such shape and size that passage of the distributor past an obstruction encountered by the skirt (30) will cause sufficient radially inward deformation of said skirt material to slope inwardly and deflect spray away from said obstruction and back beneath said shroud (12), and also effect rotation of the shroud (12).

2. An agricultural chemical liquid distributor according to claim 1 wherein said attachment means for attaching the frame (11) comprises adjustment means for adjustment of said frame into position on a vehicle, with an end of the frame extending laterally and supporting said spray head (34) and shroud (12) in an outrigger mode.

3. An agricultural chemical liquid distributor according to claim 2, further comprising a swinging arm (19), a pivot (20) connecting the swinging arm (19) to the laterally extending end of the frame (11), biasing means (22) which bias one end of the swinging arm (19) outwardly with respect to the frame (11), and a bearing (25) operatively located between said swinging arm end and shroud (12) journalling said shroud (12) for its free rotation.

4. An agricultural chemical liquid distributor according to claim 3 wherein said shroud (12) comprises a central boss (23) which contains said bearing (25), and hollow suspension means (18) depend from said frame and extend through said bearing (25) to thereby support the shroud (12) for its said free rotation, and a liquid conveying conduit (16) extending through said hollow suspension means and (18) connected in fluid communication with said spray head (34),
said spray head (34) also being carried by said hollow suspension means (18).

5. An agricultural chemical liquid distributor according to any preceding claim wherein said spray head (34) is a micro-spray head capable of producing a spray wherein 90% of droplet sizes are within a narrow range which does not include a droplet size greater than 300µm.

6. An agricultural chemical liquid distributor according to claim 4 further comprising a tank (13) for containing said agricultural chemical liquid, a pump, a conduit joining the tank, pump and micro-spray head, and electrical wires connected to said head, said conduit and wires passing through said hollow suspension means.

7. An agricultural chemical liquid distributor according to any preceding claim wherein said shroud (12) comprises a plurality of bristles which extend radially outwardly and downwardly away from the central boss (23).

8. An agricultural chemical liquid distributor according to any one of claims 1 to 6 wherein said shroud (12) comprises a mushroom shaped unitary moulding of polymeric material which reduces both in thickness and stiffness from said central boss (23) to its periphery.

9. An agricultural chemical liquid distributor according to claim 4 wherein said frame comprises a supporting sub-frame (45), a central sub-frame (50), a pair of swinging arms (48) each pivoted at one end to the supporting sub-frame (45) and at the other end to the central sub-frame (50) in a configuration which allows transverse movement of the central sub-frame (50) with respect to the supporting sub-frame (45), a biasing spring (55) between the sub-frames biasing the central sub-frame (50) in one transverse direction, wheels (47) supporting the rear end and vehicle hitch means (46) at the front end of the supporting sub-frame,
said hollow suspension means depending from the central sub-frame (50),
said shroud (52) having a relatively stiff central disc-shaped portion supporting said peripheral skirt (53).

10. An agricultural chemical liquid distributor according to any preceding claim wherein the shroud diameter exceeds half a meter.

## Patentansprüche

1. Landwirtschaftliche Verteilvorrichtung für flüssige Chemikalien, die eine Kombination der folgenden Merkmale aufweist: einen Rahmen (11), eine von dem Rahmen (11) getragene Abdeckung (12), die einen Chemikalien-Verteilraum definiert, und einen Sprühkopf (34) mit einer Öffnung, und
Befestigungsmittel (11a) zum Befestigen des Rahmens an einem Fahrzeug, Mittel, um den Sprühkopf (34) mit seiner Öffnung innerhalb des Abdeckungsraumes zu tragen, wobei die Abdeckung (12) eine im wesentlichen ringförmige Umfangsschürze (30) aus verformbarem Material aufweist und von dem Rahmen (11) um eine im wesentlichen vertikale Achse frei drehbar getragen wird,
dadurch gekennzeichnet,
daß die Abdeckung (12) eine derartige Form und Größe hat, daß, wenn die Verteilvorrichtung ein Hindernis passiert, auf das die Schürze (30) trifft, das Schürzenmaterial weit genug radial nach innen verformt wird, so daß es nach innen verläuft und Sprühmittel weg von dem Hindernis und zurück unter die Abdeckung (12) lenkt, und ferner eine Drehung der Abdeckung (12) bewirkt wird.

2. Landwirtschaftliche Verteilvorrichtung für flüssige Chemikalien nach Anspruch 1, wobei die Befestigungsmittel zum Befestigen des Rahmens (11) Einstellmittel aufweisen, um den Rahmen an einem Fahrzeug in einer Position einzustellen, in der ein Ende des Rahmens seitlich vorsteht und den Sprühkopf (34) und die Abdeckung (12) nach Art eines Auslegers trägt.

3. Landwirtschaftliche Verteilvorrichtung für flüssige Chemikalien nach Anspruch 2, die ferner aufweist: einen Schwenkarm (19), einen Zapfen (20), der den Schwenkarm (19) und das seitlich vorstehende Ende des Rahmens (11) verbindet, eine Vorspanneinrichtung (22), die ein Ende des Schwenkarmes (19) in Bezug auf den Rahmen (11) nach außen vorspannt, und ein Lager (25), das zwischen dem Ende des Schwenkarms und der Abdeckung (12) wirksam angeordnet ist und die Abdeckung (12) frei drehbar lagert.

4. Landwirtschaftliche Verteilvorrichtung für flüssige Chemikalien nach Anspruch 3, wobei die Abdeckung (12) eine zentrale Nabe (23) aufweist, die das Lager (25) enthält, wobei hohle Aufhängungsmittel (18) von dem Rahmen herabhängen und durch das Lager (25) hindurchverlaufen und dadurch die Abdeckung (12) frei drehbar tragen, und wobei eine Flüssigkeit führende Leitung (16) durch die hohlen Tragmittel (18) hindurchverläuft und mit dem Sprühkopf (34) strömungsmäßig in Verbindung steht,
wobei der Sprühkopf (34) ferner von den hohlen Tragmitteln (18) getragen wird.

5. Landwirtschaftliche Verteilvorrichtung für flüssige Chemikalien nach einem der vorherigen Ansprüche, wobei der Sprühkopf (34) als Mikro-Sprühkopf ausgebildet ist, der einen Sprühnebel erzeugen kann, bei dem 90 % der Tröpfchengröße innerhalb eines engen Bereichs liegen, der keine Tröpfchengröße größer als 300 µm enthält.

6. Landwirtschaftliche Verteilvorrichtung für flüssige Chemikalien nach Anspruch 4, die ferner aufweist: einen Tank (13) zum Aufnehmen der landwirtschaftlichen flüssigen Chemikalien, eine Pumpe, eine Leitung, die den Tank, die Pumpe und den Mikro-Sprühkopf verbindet, und mit dem Kopf verbundene elektrische Leiter, wobei die Leitung und die Leiter durch die hohlen Aufhängungsmittel hindurchverlaufen.

7. Landwirtschaftliche Verteilvorrichtung für flüssige Chemikalien nach einem der vorherigen Ansprüche, wobei die Abdeckung (12) eine Mehrzahl von Borsten aufweist, die von der zentralen Nabe (23) aus radial nach außen und nach unten verlaufen.

8. Landwirtschaftliche Verteilvorrichtung für flüssige Chemikalien nach einem der Ansprüche 1 bis 6, wobei die Abdeckung (12) als pilzförmiges einteiliges Formteil aus polymerem Material ausgebildet ist, das sowohl seine Dicke als auch seine Steifheit von der zentralen Nabe (23) aus in Richtung seines Umfangs verringert.

9. Landwirtschaftliche Verteilvorrichtung für flüssige Chemikalien nach Anspruch 4, wobei der Rahmen aufweist: ein tragendes Untergestell (45), ein zentrales Untergestell (50), ein Paar Schwenkarme (48), die in einer eine seitliche Bewegung des zentralen Untergestells (50) in Bezug auf das tragende Untergestell (45) ermöglichenden Anordnung jeweils an einem Ende mit dem tragenden Untergestell (45) und an dem anderen Ende mit dem zentralen Untergestell (50) drehbar verbunden sind, eine Vorspannfeder (55) zwischen den Untergestellen, die das zentrale Untergestell (50) in eine seitliche Richtung vorspannt, Räder (47), die das hintere Ende tragen, und Fahrzeug-Anhängemittel (46) am vorderen Ende des tragenden Untergestells,
wobei die hohlen Aufhängungsmittel von dem zentralen Untergestell (50) herabhängen und
wobei die Abdeckung (52) einen relativ steifen zentralen scheibenförmigen Teil aufweist, der die Umfangsschürze (53) trägt.

10. Landwirtschaftliche Verteilvorrichtung für chemische Flüssigkeiten nach einem der vorherigen Ansprüche, wobei der Durchmesser der Abdeckung größer ist als ein halber Meter.

## Revendications

1. Distributeur de liquide chimique à usage agricole comprenant, en combinaison, un châssis (11), un carénage (12) supporté par le châssis (11) et délimitant un espace de distribution de produits chimiques, et une tête de pulvérisation (34) ayant une sortie,
◆ des moyens de fixation (11a) servant à fixer le châssis à un véhicule, des moyens supportant la tête de pulvérisation (34) avec sa sortie placée dans l'espace de carénage, le carénage (12) ayant une jupe périphérique (30) globalement circulaire, en matériau déformable, et étant supporté par le châssis (11) pour une rotation libre autour d'un axe globalement vertical,
caractérisé par le fait que :
◆ le carénage (12) présente une forme et une taille telles que le passage du distributeur au-delà d'un obstacle rencontré par la jupe (30) va provoquer une déformation radialement intérieure suffisante dudit matériau de jupe, de façon à ce que ledit matériau de jupe s'incline vers l'intérieur et dévie la pulvérisation à distance dudit obstacle et au-dessous dudit carénage (12), et provoque également la rotation du carénage (12).

2. Distributeur de liquide chimique à usage agricole selon la revendication 1, dans lequel lesdits moyens de fixation servant à fixer le châssis (11) comprennent des moyens de réglage servant à régler ledit châssis en place sur un véhicule, une extrémité du châssis s'étendant latéralement et supportant ladite tête de pulvérisation (34) et le carénage (12) selon un mode en équerre.

3. Distributeur de liquide chimique à usage agricole selon la revendication 2, comprenant en outre un bras pivotant (19), un pivot (20) reliant le bras pivotant (19) à l'extrémité s'étendant latéralement du châssis (11), des moyens de déplacement (22) qui déplacent une extrémité du bras pivotant (19) vers l'extérieur par rapport au châssis (11) et un palier (25) placé en fonctionnement entre ladite extrémité de bras pivotant et le carénage (12), supportant à rotation ledit carénage (12) afin d'assurer sa rotation libre.

4. Distributeur de liquide chimique à usage agricole selon la revendication 3, dans lequel ledit carénage (12) comprend un bossage central (23) qui contient ledit palier (25), et des moyens de suspension (18) creux partent dudit châssis et traversent ledit palier (25) pour supporter de ce fait le carénage (12) pour sa dite rotation libre, et un conduit d'acheminement de liquide (16) s'étendant à travers lesdits moyens de suspension creux (18) et relié en communication fluidique avec ladite tête de pulvérisation (34)
ladite tête de pulvérisation (34) étant également supportée par lesdits moyens de suspension (18) creux.

5. Distributeur de liquide chimique à usage agricole selon l'une quelconque des revendications précédentes, dans lequel ladite tête de pulvérisation (34) est une tête de micro-pulvérisation pouvant produire une pulvérisation dans laquelle 90 % des tailles de gouttelettes font partie d'une plage étroite, qui ne comprend pas de tailles de gouttelettes supérieures à 300 µm.

6. Distributeur de liquide chimique à usage agricole selon la revendication 4, comprenant en outre un réservoir (13) destiné à contenir ledit liquide chimique à usage agricole, une pompe, un conduit reliant le réservoir, la pompe et la tête de micro-pulvérisation, et des fils électriques connectés à ladite tête, ledit conduit et lesdits fils traversant lesdits moyens de suspension creux.

7. Distributeur de liquide chimique à usage agricole selon l'une quelconque des revendications précédentes, dans lequel ledit carénage (12) comprend une pluralité de poils de brosserie qui s'étendent radialement vers l'extérieur et vers le bas depuis le bossage central (23).

8. Distributeur de liquide chimique à usage agricole selon l'une quelconque des revendications 1 à 6, dans lequel ledit carénage (12) comprend un moulage monobloc en forme de champignon en matériau polymère, qui se réduit à la fois en épaisseur et en rigidité en allant dudit bossage central (23) jusqu'à sa périphérie.

9. Distributeur de liquide chimique à usage agricole selon la revendication 4, dans lequel ledit châssis comprend un sous-châssis de support (45), un sous-châssis central (50), un couple de bras pivotants (48) montés en pivot chacun par une extrémité au sous-châssis de support (45) et par l'autre extrémité au sous-châssis central (50) dans une configuration qui permet le déplacement transversal du sous-châssis central (50) par rapport au sous-châssis de support (45), un ressort de déplacement (55) entre les sous-châssis déplaçant le sous-châssis central (50) dans une direction transversale, des roues (47) supportant l'extrémité arrière et des moyens d'attelage de véhicule (46) au niveau de l'extrémité avant du sous-châssis de support,
◆ lesdits moyens de suspension creux partant du sous-châssis central (50),
◆ ledit carénage (52) ayant une partie centrale en forme de disque, relativement rigide, supportant ladite jupe périphérique (53).

10. Distributeur de liquide chimique à usage agricole selon l'une quelconque des revendications précédentes, dans lequel le diamètre de carénage dépasse la moitié d'un mètre.
